# EUROPEAN PATENT APPLICATION

(11) **EP 4 769 450 A1**
(43) Date of publication of application: **01.07.2026**
(21) Application number: 24906005.4
(22) Date of filing: 26.11.2024
(51) Int. Cl.: H01B 12/10

(54) **METHOD FOR PREPARING SUPERCONDUCTING COMPOSITE ROD, SUPERCONDUCTING COMPOSITE ROD, AND SUPERCONDUCTING WIRE**

(30) Priority: 22.12.2023 CN 202311774376
(71) Applicant: Xi'an Superconducting Wire Technologies Co., Ltd., Xi'an, Shaanxi 713703 (CN)
(72) Inventor: GUO, Qiang, Xi'an, Shaanxi 713703 (CN); WANG, Ruilong, Xi'an, Shaanxi 713703 (CN); ZHOU, Zijing, Xi'an, Shaanxi 713703 (CN); JIA, Wenbing, Xi'an, Shaanxi 713703 (CN); LIU, Xiang, Xi'an, Shaanxi 713703 (CN); YANG, Yiwen, Xi'an, Shaanxi 713703 (CN); FANG, Yuankun, Xi'an, Shaanxi 713703 (CN); HU, Jinlong, Xi'an, Shaanxi 713703 (CN); ZHANG, Kailin, Xi'an, Shaanxi 713703 (CN); HAN, Luyang, Xi'an, Shaanxi 713703 (CN); ZHU, Yanmin, Xi'an, Shaanxi 713703 (CN); LIU, Xianghong, Xi'an, Shaanxi 713703 (CN); FENG, Yong, Xi'an, Shaanxi 713703 (CN)
(74) Representative: Lin Chien, Mon-Yin
(86) International application number: PCT/CN2024/134435
(87) International publication number: WO 2025/130520

(57) **Abstract**

The present application discloses a method for preparing a superconducting composite rod, a superconducting composite rod, and a superconducting wire. The preparation method comprises: bundling a plurality of single-core rods and then placing same into a copper pipe, to form a composite ingot; heating the composite ingot; on the basis of a required diameter, selecting an extrusion container; and performing backward extrusion on the heated composite ingot by using the extrusion container, to obtain a superconducting composite rod. According to the present application, by performing backward extrusion after heating the composite ingot, problems such as severe tail shrinkage, poor filament deformation, and low yield of composite rods obtained by performing conventional forward extrusion are solved.

## Description

### TECHNICAL FIELD

The present disclosure generally relates to the field of metal processing technologies, and especially relates to a method for preparing a superconducting composite rod, a superconducting composite rod, and a superconducting wire.

### BACKGROUND

With the continuous improvement of the living standard of people, demands for high-end medical technologies, medical equipment, and medical apparatus and instruments has significantly increased, including a high-end medical imaging device magnetic resonance imaging instrument (MRI). In recent years, under the influence of the global medical environment, the demand for MRI equipment has increased in a well-jetting manner, and the contract quantity of well-known MRI manufacturers at home and abroad has significantly increased. The key raw materials of the MRI equipment include niobium titanium (NbTi) and so on, and the price is especially important for an overall cost of the whole MRI equipment. Therefore, upstream and downstream enterprises have started lean production throughout the entire manufacturing process of MRI equipment, for optimizing the entire process from raw materials, processing processes, tests and transportation, etc. to reduce production costs thereof. The niobium titanium/copper (NbTi/Cu) superconducting wire that is prepared by NbTi is a functional material so that a complex production process, a long production cycle, numerous processes, and extremely high-quality requirements are occurred.

At present, the mass production of NbTi/Cu superconducting wires usually adopts forward extrusion for performing hot extrusion, which means that the direction of metal movement is the same as that of the extrusion container. Because a relative motion is occurred between the material and the extrusion container, so that an extrusion yield is low and a deformation of the core filament is uneven, thereby resulting in the composite wire being stretched to the finished product specification, uneven deformation parts of the core filament is removed more, leading to a significant decrease in the yield and a significant increase in production costs. Therefore, there is an urgent need to develop a hot extrusion processing method with a high extrusion yield and high deformation uniformity of the core filament.

### SUMMARY

A method for preparing a superconducting composite rod, a superconducting composite rod, and a superconducting wire according to an embodiment of the present disclosure are provided, which can solve the problem of low extrusion yield caused by normal extrusion in the related art.

On one hand, a method for preparing a superconducting composite rod according to an embodiment of the present disclosure includes:
bundling a plurality of single-core rods and then placing same into a copper pipe, to form a composite ingot;
heating the composite ingot;
selecting an extrusion container according to a required diameter; and
performing backward extrusion on the heated composite ingot by using the extrusion container, to obtain a superconducting composite rod.

On the other hand, a superconducting composite rod according to an embodiment of the present disclosure is provided. The superconducting composite rod is prepared by the method above mentioned.

On the other hand, a superconducting wire according to an embodiment of the present disclosure is provided. The superconducting wire is prepared by the method above mentioned.

The method for preparing the superconducting composite rod, the superconducting composite rod, and the superconducting wire provided by the present disclosure has the following advantages:
The composite ingot is assembled by using a conical upper cover and a special-shaped insertion rod. The composite ingot is first preheated at a low temperature in a resistance furnace, then heated at a high temperature by gradient coil induction, at last, the superconducting composite rod is prepared by performing backward extrusion and water quenching. Selecting an appropriate preheating temperature, an extrusion temperature, and an extrusion container based on an outer diameter and a copper ratio of the composite ingot, which effectively solves the problems such as severe tail shrinkage of, poor deformation of core filaments, and a low yield are occurred that conventional forward extrusion is performed the composite rod.

### BRIEF DESCRIPTION OF THE DRAWINGS

In order to more clearly understand the technical solution hereinafter in embodiments of the present disclosure or the related art, a brief description to the drawings used in detailed description of embodiments or the related art hereinafter is provided thereof. Obviously, the drawings described below are some embodiments of the present disclosure, for one of ordinary skill in the related art, other drawings can be obtained according to the drawings below on the premise of no creative work.
FIG. 1 is a schematic view of a copper pipe and a copper cover according to an embodiment of the present disclosure.
FIG. 2 is a schematic view of a composite rod according to an embodiment of the present disclosure.

The element labels according to the embodiment of the present disclosure shown as below:
1-copper pipe, 2-upper cover, 3-lower cover, 4-trapezoidal inserting rod, 5-triangular inserting rod, 6-single-core rod.

### DETAILED DESCRIPTION

Reference will now be made in detail to embodiments, examples of which are illustrated in the accompanying drawings. Obviously, the implementation embodiment in the description is a part of the present disclosure implementation examples, rather than the implementation of all embodiments, examples. According to the described exemplary embodiment of the present disclosure, all other embodiments obtained by one of ordinary skill in the related art on the premise of no creative work are within the protection scope of the present disclosure.

A method for preparing a superconducting composite rod according to an embodiment of the present disclosure includes:
step S100, bundling a plurality of single-core rods 6 and then placing same into a copper pipe 1, to form a composite ingot.

Illustratively, the single-core rod 6 can be a NbTi/Cu single-core rod or other single-core rods that are used for preparing superconducting wires. Before installing the single-core rod 6 into the copper pipe 1, it is necessary to clean both the single-core rod 6 and the copper pipe 1, nitric acid is preferably used for cleaning both the single-core rod 6 and the copper pipe 1.

A cross-section of the single-core rod 6 is a regular hexagon, and a cross-section of the copper pipe 1 is circular, wherein after the plurality of single-core rods 6 is placed into the copper pipe 1, a copper inserting rod is inserted into a gap between the plurality of single-core rods 6 and the copper pipe 1. The copper inserting rod includes a trapezoidal inserting rod 4 and a triangular inserting rod 5. The trapezoidal insertion rod 4 or the triangular insertion rod 5 can be flexibly selected according to a size of the gap between the single-core rod 6 and the copper pipe 1.

Furthermore, after the plurality of single-core rods 6 is placed into the copper pipe 1, copper covers are arranged at two ends of the copper pipe 1, and the copper caps are welded onto the copper pipe 1 to form the composite ingot. Specifically, the copper covers can be welded on the copper pipe 1 by an electronic beam sealing welding technology.

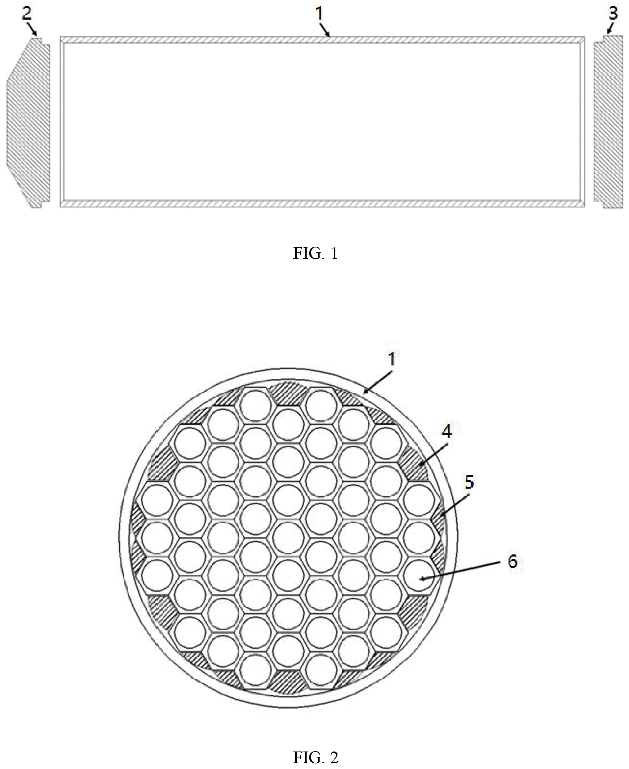

Referring to FIG. 1, the copper cover of the present disclosure includes an upper cover 2 and a lower cover 3, the upper cover adopts a conical structure, and the lower cover can adopt a disc-shaped structure. A cone angle of the upper cover 2 is 120°. In order to ensure that all the upper cover 2, the lower cover 3 and the copper pipe 1 are tightly assembled, the end face of the copper pipe 1 is needed to be chamfered. After inserting the copper inserting rod made of oxygen free copper into the copper pipe 1, a filling rate of the composite ingot is required to be greater than 95%. Finally, a vacuum electron beam welding machine is used to seal and weld the assembled sleeve.

Step S110, heating the composite ingot.

Illustratively, preheating the composite ingot before the composite ingot is heated. Specifically, a resistance furnace can be used to preheat the composite ingot, with a preheating temperature being controlled at 200-300 °C, a maximum heating rate no more than 100 °C/h, and a preheating time controlled at 1h-2h. During preheating, a layer of stainless steel plate needs to be laid on a bottom plate of the resistance furnace to prevent the impurity on the surface of the composite ingot.

After the composite ingot is completely preheated, a plurality of induction coils can be used in sequence to heat the composite ingot, and temperatures of the plurality of induction coils are increased in sequence. In an embodiment of the present disclosure, there are six induction coils, and a temperature difference between adjacent induction coils is 40-80 °C. A heating time that the composite ingot is heated in each induction coil is 10-40 minutes. During the heating process, infrared induction can be used to monitor an actual temperature of the composite ingot.

Step S120, selecting an extrusion container and an extrusion mold according to a required diameter.

Illustratively, the extrusion container can be selected based on the diameter of the superconducting composite rod that is ultimately required. A gap between an inner diameter of the extrusion container and an outer diameter of the composite ingot that is heated is controlled at 5-10 mm, and the extrusion mold is concave with a cone angle of 120 °.

Step S130, performing backward extrusion on the heated composite ingot by using the extrusion container, to obtain a superconducting composite rod.

Illustratively, before using the extrusion container to perform backward extrusion on the composite ingot, both the extrusion container and the extrusion mold are also preheated, with the preheating temperature controlled at 200-300 °C, and lubricant is applied to both the extrusion container and the extrusion mold. At the same time, it is necessary to carefully clean inner walls of the extrusion container and surfaces of the extrusion mold before performing extrusion to prevent foreign matter from being mixed therein.

After the extrusion is started, a backward extrusion speed is controlled at 10-20 mm/s. The extrusion rod needs to be immediately quenched with water after being taken out of the mold, a quenching time is controlled between 1-3 minutes, and a temperature of the quenching cooling water is controlled between 20-30 °C.

A superconducting composite rod according to an embodiment of the present disclosure is provided. The superconducting composite rod is prepared by the above method.

A superconducting wire according to an embodiment of the present disclosure is provided. The superconducting wire is prepared by the above superconducting composite rod.

Illustratively, the superconducting composite rod can be drawn a plurality of times to form the superconducting wire.

### A first embodiment

Firstly, 55 hexagonal H15 mm that are cleaned and a NbTi/Cu single-core rod with a length of 560 mm are neatly and densely arranged inside an oxygen free copper pipe with an outer diameter of Φ152 mm, an inner diameter of Φ133 mm, and a length of 600 mm. And then, six trapezoidal inserting rods and twelve triangular inserting rods are filled in a gap between the oxygen free copper pipe and the single-core rod. Finally, the upper cover with a thickness of 55 mm and the lower cover with a thickness of 30 mm are embedded into two ends of the oxygen free copper pipe, and the assembled composite ingot is performed vacuum welding in an electron beam welding machine. Preheating the welded NbTi/Cu composite ingot in a resistance furnace, with a preheating temperature of 200 °C, a heating speed of 90 °C/h, and a preheating insulation time of 1 hour. Before loading into the furnace, laying a layer of stainless steel plate on the bottom plate of the furnace to prevent foreign matter from being mixed on the surface of the composite ingot. The preheated composite ingot is transferred to the plurality of induction coils for performing high-temperature heating. The heating temperatures of the plurality of induction coils are 270 °C, 340 °C, 410 °C, 480 °C, 550 °C, and 620 °C, respectively. The heating times of the plurality of induction coils are 20 minutes, 20 minutes, 20 minutes, 30 minutes, 30 minutes, and 30 minutes, respectively. Preheating the extrusion container with the diameter of Φ155 mm and the conical mold with the diameter of Φ40 mm, while performing induction heating on the composite ingot, with a preheating temperature of 200 °C. Coating lubricant to the extrusion container and the mold when heating the last induction coil is to be finished. After the preparation work is ready, the heated composite ingot is transferred to the inside of the extrusion container for performing backward extrusion, and an extrusion speed is controlled at 10-20 mm/s. After the extrusion rod with a diameter of Φ40 mm is taken out of the mold, the extrusion rod is immediately transferred to a water tank for quenching until the extrusion rod cools to the room temperature. After being taken out, measuring the outer diameter of the extrusion rod, and finally sawing the head and the tail of the Φ40 mm extrusion rod until 55 layers of core filaments are appeared, thereby obtaining a NbTi/Cu superconducting composite rod with a uniform deformation of the core filament. Compared the extrusion ingot with an ingot-type of Φ152 mm with forward extrusion, the extrusion yield is increased by about 3%, and the effect is significant. A second embodiment

Firstly, 55 hexagonal H25 mm that are cleaned and a NbTi/Cu single-core rod with a length of 700 mm are neatly and densely arranged inside an oxygen free copper pipe with an outer diameter of Φ230 mm, an inner diameter of Φ195 mm, and a length of 720 mm. And then, six trapezoidal inserting rods and twelve triangular inserting rods are filled in a gap between the oxygen free copper pipe and the single-core rod. Finally, the upper cover with a thickness of 55 mm and the lower cover with a thickness of 30 mm are embedded into two ends of the oxygen free copper pipe, and the assembled composite ingot is performed vacuum welding in an electron beam welding machine. Preheating the welded NbTi/Cu composite ingot in a resistance furnace, with a preheating temperature of 250 °C, a heating speed of 80 °C/h, and a preheating insulation time of 2 hours. Before loading into the furnace, laying a layer of stainless steel plate on the bottom plate of the furnace to prevent foreign matter from being mixed on the surface of the composite ingot. The preheated composite ingot is transferred to the plurality of induction coils for performing high-temperature heating. The heating temperatures of the plurality of induction coils are 320 °C, 390 °C, 460 °C, 530 °C, 600 °C, and 670 °C, respectively. The heating times of the plurality of induction coils are 20 minutes, 20 minutes, 20 minutes, 30 minutes, 30 minutes, and 30 minutes, respectively. Preheating the extrusion container with the diameter of Φ235 mm and the conical mold with the diameter of Φ80 mm, while performing induction heating on the composite ingot, with a preheating temperature of 200 °C. Coating lubricant to the extrusion container and the mold when heating the last induction coil is to be finished. After the preparation work is ready, the heated composite ingot is transferred to the inside of the extrusion container for performing backward extrusion, and an extrusion speed is controlled at 10-20 mm/s. After the extrusion rod with a diameter of Φ80 mm is taken out of the mold, the extrusion rod is immediately transferred to a water tank for quenching until the extrusion rod cools to the room temperature. After being taken out, measuring the outer diameter of the extrusion rod, and finally sawing the head and the tail of the Φ80 mm extrusion rod until 55 layers of core filaments are appeared, thereby obtaining a NbTi/Cu superconducting composite rod with a uniform deformation of the core filament. Compared the extrusion ingot with an ingot-type of Φ230 mm with forward extrusion, the extrusion yield is increased by about 4.5%, and the effect is significant.

### A third embodiment

Firstly, 55 hexagonal H35 mm that are cleaned and a NbTi/Cu single-core rod with a length of 800 mm are neatly and densely arranged inside an oxygen free copper pipe with an outer diameter of Φ305 mm, an inner diameter of Φ261 mm, and a length of 820 mm. And then, six trapezoidal inserting rods and twelve triangular inserting rods are filled in a gap between the oxygen free copper pipe and the single-core rod. Finally, the upper cover with a thickness of 75 mm and the lower cover with a thickness of 40 mm are embedded into two ends of the oxygen free copper pipe, and the assembled composite ingot is performed vacuum welding in an electron beam welding machine. Preheating the welded NbTi/Cu composite ingot in a resistance furnace, with a preheating temperature of 300 °C, a heating speed of 70 °C/h, and a preheating insulation time of 2 hours. Before loading into the furnace, laying a layer of stainless steel plate on the bottom plate of the furnace to prevent foreign matter from being mixed on the surface of the composite ingot. The preheated composite ingot is transferred to the plurality of induction coils for performing high-temperature heating. The heating temperatures of the plurality of induction coils are 300 °C, 380 °C, 460 °C, 540 °C, 620 °C, and 700 °C, respectively. The heating times of the plurality of induction coils are 15 minutes, 15 minutes, 20 minutes, 30 minutes, 40 minutes, and 40 minutes, respectively. Preheating the extrusion container with the diameter of Φ310 mm and the conical mold with the diameter of Φ90 mm, while performing induction heating on the composite ingot, with a preheating temperature of 200 °C. Coating lubricant to the extrusion container and the mold when heating the last induction coil is to be finished. After the preparation work is ready, the heated composite ingot is transferred to the inside of the extrusion container for performing backward extrusion, and an extrusion speed is controlled at 10-20 mm/s. After the extrusion rod with a diameter of Φ90 mm is taken out of the mold, the extrusion rod is immediately transferred to a water tank for quenching until the extrusion rod cools to the room temperature. After being taken out, measuring the outer diameter of the extrusion rod, and finally sawing the head and the tail of the Φ90 mm extrusion rod until 55 layers of core filaments are appeared, thereby obtaining a NbTi/Cu superconducting composite rod with a uniform deformation of the core filament. Compared the extrusion ingot with an ingot-type of Φ305 mm with forward extrusion, the extrusion yield is increased by about 6%, and the effect is significant.

Although the preferred embodiments of the present disclosure have been described, any additional changes and modifications to these embodiments can made by one of ordinary skill in the related art once the basic inventive concept of the present disclosure is known. Therefore, the attached claims are intended to be interpreted as including preferred embodiments and all changes and modifications that fall within the protection scope of the present disclosure.

Obviously, one of ordinary skill in the related art can make various modifications and variations to the present disclosure without departing from the spirit and scope of the present disclosure. In this way, if these modifications and variations of the present disclosure fall within the scope of the appended claims and equivalent technologies of the present disclosure, then the present disclosure is also intended to include these modifications and variations.

## Claims

1. A method for preparing a superconducting composite rod, **characterized in that**, comprising:
bundling a plurality of single-core rods and then placing same into a copper pipe, to form a composite ingot;
heating the composite ingot;
selecting an extrusion container according to a required diameter; and
performing backward extrusion on the heated composite ingot by using the extrusion container, to obtain a superconducting composite rod.

2. The method for preparing a superconducting composite rod as claimed in claim 1, **characterized in that**, after the plurality of single-core rods (6) is placed into the copper pipe (1), copper covers are arranged at two ends of the copper pipe (1), and the copper caps are welded onto the copper pipe (1) to form the composite ingot.

3. The method for preparing a superconducting composite rod as claimed in claim 2, **characterized in that**, the copper covers are welded on the copper pipe (1) by an electronic beam sealing welding technology.

4. The method for preparing a superconducting composite rod as claimed in claim 1, **characterized in that**, a cross-section of the single-core rod (6) is a regular hexagon, and a cross-section of the copper pipe (1) is circular, wherein after the plurality of single-core rods (6) is placed into the copper pipe (1), a copper inserting rod is inserted into a gap between the plurality of single-core rods (6) and the copper pipe (1).

5. The method for preparing a superconducting composite rod as claimed in claim 4, **characterized in that**, the copper inserting rod comprises a trapezoidal inserting rod (4) and a triangular inserting rod (5).

6. The method for preparing a superconducting composite rod as claimed in claim 1, **characterized in that**, preheating the composite ingot before the composite ingot is heated.

7. The method for preparing a superconducting composite rod as claimed in claim 1, **characterized in that**, the composite ingot is heated by a plurality of induction coils in turn, and temperatures of the plurality of induction coils are increased sequentially.

8. The method for preparing a superconducting composite rod as claimed in claim 1, **characterized in that**, before using the extruding container to perform backward extrusion on the composite ingot, further pre-heating the extruding container, and coating lubricant on the extruding container.

9. A superconducting composite rod, **characterized in that**, the superconducting composite rod is prepared by the method as claimed in any one of claim 1 to claim 8.

10. A superconducting wire is prepared by the superconducting composite rod as claimed in claim 9.
